# EUROPÄISCHE PATENTSCHRIFT

(11) **EP 3 429 907 B1**
(45) Veröffentlichungstag und Bekanntmachung des Hinweises auf die Patenterteilung: **29.04.2020**
(21) Anmeldenummer: 17709683.1
(22) Anmeldetag: 09.03.2017
(51) Int. Cl.: B62D 1/184

(54) **LENKSÄULE FÜR EIN KRAFTFAHRZEUG UND VERFAHREN ZUM HERSTELLEN EINER LENKSÄULE**
STEERING COLUMN FOR VEHICLE AND A METHOD FOR MANIFACTURING A STEERING COLUMN
COLONNE DE DIRECTION POUR VÉHICULE ET PROCÉDÉ POUR FABRIQUER UNE TELLE COLONNE DE DIRECTION

(30) Priorität: 17.03.2016 DE 102016204411
(43) Veröffentlichungstag der Anmeldung: 23.01.2019
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SINIS JÁUREGUI, Francisco, 6800 Feldkirch (AT)
(74) Vertreter: thyssenkrupp Intellectual Property GmbH
(86) Internationale Anmeldenummer: PCT/EP2017/055554
(87) Internationale Veröffentlichungsnummer: WO 2017/157755

(56) Entgegenhaltungen:
- WO-A1-2009/013457
- DE-A1-102011 054 597
- JP-A- 2011 105 122

## Beschreibung

### Stand der Technik

Die Erfindung betrifft eine Lenksäule für ein Kraftfahrzeug, umfassend
eine Manteleinheit mit einem Mantelrohr, das zumindest einen Klemmabschnitt aufweist mit einem in Richtung der Längsachse verlaufenden Schlitz,
eine Klemmschelle, die mit zwei einander quer zur Längsachse gegenüberliegenden, über einen Bogenabschnitt miteinander verbundenen Schenkeln, zwischen denen der Klemmabschnitt des Mantelrohrs zumindest teilweise aufgenommen ist,
eine in dem Mantelrohr angeordnete Stelleinheit mit einer darin um ihre Längsachse drehbar gelagerten Lenkspindel,
eine Spanneinrichtung, die in einer Fixierstellung die Klemmschelle auf dem Mantelrohr verspannt, wobei der Klemmbereich auf der Stelleinheit verspannt wird und die Stelleinheit in Richtung der Längsachse relativ zum Mantelrohr festlegt und in einer Freigabestellung die Klemmschelle entspannt und eine Verstellung der Stelleinheit relativ zum Mantelrohr in Richtung der Längsachse freigibt,
wobei die Spanneinrichtung die Schenkel in Fixierstellung quer zur Längsachse gegeneinander zusammendrückt.

Weiterhin betrifft die Erfindung ein Verfahren zur Herstellung eines Mantelrohrs für eine Lenksäule sowie zur Herstellung einer Lenksäule.

Zur Anpassung der Lenkradposition an die Sitzposition des Fahrers eines Kraftfahrzeugs sind längenverstellbare Lenksäulen bekannt, bei denen das am hinteren Ende der Lenkspindel angebrachte Lenkrad in Längsrichtung, d.h. in Richtung der Lenksäulen-Längsachse im Fahrzeuginnenraum positioniert werden kann.

Hierzu ist die Stelleinheit in Längsrichtung teleskopartig verstellbar in einem Mantelrohr angeordnet, welches auch als äußeres Mantelrohr oder Führungskasten bezeichnet wird und durch eine Halte- oder Trageinheit mit der Fahrzeugkarosserie verbunden ist. Mittels einer lösbaren Spanneinrichtung ist die Stelleinheit in unterschiedlichen Längspositionen entlang der Längsachse feststellbar, d.h. lösbar fixierbar.

Bei einer gattungsgemäßen Lenksäule - wie beispielsweise aus der JP 2011 105122 A bekannt - erfolgt die Fixierung durch eine Klemmschelle, die in einem Klemmabschnitt das Mantelrohr umgreift. Die Spanneinrichtung, auch als Feststelleinrichtung bezeichnet, drückt in Fixierstellung die Schenkel der Klemmschelle mit einer Spannkraft gegeneinander, wodurch die Klemmschelle zusammengezogen und auf dem Mantelrohr verspannt wird, welches dabei in dem durch den Schlitz längs geteilten Klemmabschnitt radial zusammengepresst wird. Dadurch wird die Stelleinheit in dem Klemmabschnitt radial verspannt und relativ zum Mantelrohr in Längsrichtung reibschlüssig fixiert. In geöffnetem Zustand - auch als Freigabestellung oder Löseposition bezeichnet - wird die auf die Schenkel ausgeübte Spannkraft gelöst, wodurch die Klemmschelle entspannt wird und den Klemmabschnitt freigibt, so dass der Reibschluss zwischen Mantelrohr und Stelleinheit gelöst wird und eine Verschiebung der Stelleinheit gegenüber dem Mantelrohr in Längsrichtung zur Einstellung der Lenkradposition möglich ist.

In der besagten JP 2011 10522 A wird die Klemmschelle beim Verspannen zusammengezogen, wobei die Schenkel in radialer Richtung gegeneinander und dadurch im Klemmabschnitt von außen gegen das Mantelrohr zusammengedrückt werden. Dadurch kann die Spannkraft von der Klemmschelle auf die Stelleinheit übertragen werden, wobei deren durch den Längsschlitz geteilte Umfangsbereiche gegen die Außenseite der Stelleinheit angedrückt und damit reibschlüssig verbunden werden. Nachteilig ist jedoch, dass die Krafteinleitung von der Klemmschelle auf den Klemmbereich überwiegend in radialer Richtung erfolgt, und dadurch eine über den Umfang des Klemmabschnitts unterschiedlich verteilte, hohe lokale Flächenpressung auftreten kann. Folglich wird die Spannkraft mit einem relativ geringen Wirkungsgrad auf das Reibpaar zwischen Mantelrohr und Stelleinheit übertragen. Entsprechend muss eine relativ hohe Spannkraft aufgewandt werden, um eine sichere Fixierung der Stelleinrichtung zu erreichen.

Angesichts der vorangehend erläuterten Problematik ist es eine Aufgabe der vorliegenden Erfindung, eine Lenksäule der eingangs genannten Art zur Verfügung zu stellen, welche eine verbesserte und gleichmäßigere Verspannung der Stelleinheit in dem Klemmabschnitt des Mantelrohrs ermöglicht.

### Darstellung der Erfindung

Zur Lösung der vorgenannten Problematik wird erfindungsgemäß vorgeschlagen, dass in den einander gegenüberliegenden Randbereichen des Schlitzes an dem Mantelrohr Mitnehmerelemente angeordnet sind, und die Schenkel auf ihren einander zugewandten Seiten Kontaktelemente aufweisen, die in Fixierstellung quer zur Längsachse gegen die einander abgewandten Außenseiten der Mitnehmerelemente andrückbar sind, wobei der Schlitz durch die Überführung der Spanneinrichtung ausgehend von der Freigabestellung in die Fixierstellung verschmälert wird.

Erfindungsgemäß sind an dem in dem Klemmabschnitt Mitnehmerelemente angebracht oder ausgebildet, die beiderseits des Schlitzes angeordnet sind. Die Mitnehmerelemente stehen von dem Außenumfang des Mantelrohrs radial nach außen vor. Sie können bevorzugt unmittelbar benachbart zu dem Schlitz angeordnet sein, d.h. entlang der einander in Umfangsrichtung gegenüberliegenden Randbereiche des Schlitzes, so dass sie einander in Umfangsrichtung im Abstand der Schlitzbreite, also der Breite des Schlitzes quer zur Längsachse gemessen, d.h. in Umfangsrichtung, einander gegenüberliegende Innenseiten aufweisen.

Die Mitnehmerelemente können als radial vorstehende Vorsprünge ausgebildet sein, die sich abschnittweise über einen Teilbereich der axialen Länge des Schlitzes oder auch über dessen gesamte Länge erstrecken können. Bezüglich des Schlitzes sind die Mitnehmerelemente jeweils paarweise in Umfangsrichtung, d.h. quer zur Längsachse gegenüberliegend angeordnet, wobei sie jeweils einander zugewandte, auf beiden Seiten des Schlitzes gegenüberliegende Innenseiten aufweisen, und von dem Schlitz in Umfangsrichtung abgewandte Außenseiten, die jeweils Außenflächenbereiche mit einer vom Schlitz aus gesehen im Wesentlichen tangential zum Außenumfang des Mantelrohrs nach außen weisenden Flächennormalen aufweisen.

In Umfangsrichtung gesehen von dem Schlitz abgewandt befindet sich jeweils die Außenseiten eines Mitnehmerelements, d.h. die Außenseiten der einander gegenüberliegenden Mitnehmerelemente sind in Umfangsrichtung voneinander abgewandt. Von der Längsachse des Mantelrohrs aus gesehen erstrecken sich die Außenseiten im Wesentlichen radial nach außen, so dass sie Flächenbereiche umfassen, die parallel zu einer Längsebene liegen, in der die Längsachse liegt und die sich durch den Schlitz erstreckt.

An der Klemmschelle sind erfindungsgemäß mit den Mitnehmerelementen korrespondierende Kontaktelemente angeordnet. Die Kontaktelemente sind derart auf den in Umfangsrichtung einander zugewandten Innenseiten der Schenkel positioniert, so dass der Schlitz und die am Rand des Schlitzes befindlichen Mitnehmerelemente in Umfangsrichtung zwischen den einander gegenüberliegenden Kontaktelementen liegen. Dabei stehen die Kontaktelemente von den Schenkeln ab, so dass sie bezogen auf den Außenumfang des Klemmabschnitts vorwiegend in tangentialer Richtung bezogen auf den Außenumfang des Mantelrohrs gegen die Mitnehmerelemente gerichtet sind. Dies hat zur Folge, dass die Kontaktelemente beim Fixieren der Spanneinrichtung zusammen mit den dabei im Umfangsrichtung aufeinander zu bewegten Innenseiten der Schenkel ebenfalls aufeinander zu bewegt werden, d.h. bezüglich des Umfangs des Mantelrohrs im Bereich des Schlitzes im Wesentlichen in tangentialer Richtung. Dabei kontaktieren sie jeweils die Außenseiten der einander gegenüberliegenden Mitnehmerelemente in Umfangsrichtung, d.h. in tangentialer Richtung bezogen auf den Außenumfang des Klemmabschnitts. Dadurch bewegen sie beim Fixieren der Spanneinrichtung die einander in Umfangsrichtung gegenüberliegenden Mitnehmerelemente in Umfangsrichtung gegeneinander.

Entsprechend wird dabei von der Spanneinrichtung die Spannkraft über die Schenkel der Klemmschelle und über die Kontaktabschnitte der Spanneinrichtung erfindungsgemäß überwiegend in Umfangsrichtung bzw. tangential auf die Mitnehmerelemente des Mantelrohrs übertragen, so dass die einander gegenüberliegenden Randbereiche des Schlitzes gegeneinander gezogen werden. Mit anderen Worten wirkt die Spannkraft erfindungsgemäß auf die Randbereiche in Richtung der Schlitzbreite, d.h. sie wirkt unmittelbar auf eine Verringerung der Schlitzbreite hin. Dadurch wird die Spannkraft als Zugspannung in den Umfang des Mantelrohrs im Klemmbereich eingeleitet. Folglich wird der Klemmbereich nahezu über seinen gesamten Umfang - abzüglich der Schlitzbreite des Schlitzes - flächig gegen den äußeren Umfang der Stelleinheit verspannt. Auf diese Weise ergibt sich eine effizientere Übertragung der Spannkraft von der Spanneinrichtung über die Klemmschelle auf den Klemmabschnitt, und von dem Klemmabschnitt auf die Stelleinheit.

Durch die erfindungsgemäß tangential zum Umfang in den Klemmabschnitt eingeleitete Spannkraft wird außerdem eine vorteilhafte, über den Umfang gleichmäßigere Krafteinleitung realisiert im Gegensatz zu den ungleichmäßigen hohen Flächenpressungen bei der vorwiegend radialen Krafteinleitung im Stand der Technik.

Bevorzugt kann die Klemmschelle im Wesentlichen U-förmig ausgebildet sein. Unter im Wesentlichen U-förmig wird verstanden, dass die Schenkel, die über den Bogenabschnitt miteinander verbunden sind, parallel ±10° zueinander ausgerichtet sind. Die Schenkel sind zueinander beabstandet, wobei zwischen den Schenkeln ein einziger Spalt ausgebildet ist.

Bevorzugt weist der Klemmabschnitt genau einen einzigen Schlitz auf. Dieser Schlitz wird durch die Überführung der Spanneinrichtung ausgehend von der Freigabestellung in die Fixierstellung verschmälert.

In einer vorteilhaften Weiterbildung kann es vorgesehen sein, dass die Mitnehmerelemente des Mantelrohrs und die Kontaktelemente der Schelle durch schweißen miteinander verbunden sind. Nach der Schweißoperation kann es vorgesehen sein, dass ein Dorn in das Mantelrohr eingeführt wird, um den Innendurchmesser des Mantelrohrs genau einzustellen. Mit anderen Worten kann nach dem Schweißen ein Kalibrieren des Innendurchmessers des Mantelrohrs vorgesehen sein, um einen Schweißverzug auszugleichen.

Die Mitnehmerelemente können bevorzugt von dem Mantelrohr radial nach außen vorstehen. Sie weisen beiderseits des Schlitzes einander gegenüberliegende Innenseiten auf, die bevorzugt im Abstand der Schlitzbreite voneinander entfernt sind und Innenflächenbereiche mit im Wesentlichen gegeneinander gerichteten Flächennormalen aufweisen. Auf ihren dem Schlitz in tangentialer bzw. Umfangsrichtung abgewandten Außenseiten sind Flächenbereiche als Mitnehmerflächen mit voneinander weg gerichteten, vorwiegend tangential bezüglich des Mantelrohrs in den Randbereichen des Schlitzes weisenden Flächennormalen ausgebildet, die von den Kontaktelementen im Wesentlichen in tangentialer Richtung kontaktiert werden können.

Eine vorteilhafte Ausführung der Erfindung sieht vor, dass zumindest ein Mitnehmerelement als Aufbiegung des Mantelrohrs in zumindest einem Teilbereich des Randbereiches des Schlitzes ausgebildet ist. Dabei wird ein Mitnehmerelement dadurch gebildet, dass ein in Richtung der Längsachse, d.h. in Längsrichtung verlaufender axialer Randbereich des Schlitzes zumindest abschnittweise bezüglich der Längsachse nach außen gebogen oder abgekantet wird, so dass der umgebogene Randabschnitt des Randbereichs ein Mitnehmerelement bildet. Die Aufbiegung kann etwa im Bereich von 90° +/- 20° erfolgen, so dass die einander gegenüberliegenden aufgebogenen Randflächenbereiche im Wesentlichen parallel zueinander und zu einer Längsebene liegen, die sich durch den Schlitz erstreckt und in der die Längsachse liegt.

Die Mitnehmerelemente können einstückig mit dem Mantelrohr ausgebildet sein durch Umformung des Mantelrohrs im Randbereich des Schlitzes, beispielsweise durch eine Auf- bzw. Umbiegung, Prägung, Stauchung, Bördelung oder dergleichen. Mit anderen Worten ist das Mitnehmerelement und das Mantelrohr ein einstückiges integrales Bauteil. Alternativ kann an dem Mantelrohr eine Rippe, ein Steg oder ein sonstiger Vorsprung befestigt werden.

Vorzugsweise kann die Aufbiegung der Wandung des Mantelrohrs erfolgen, wenn das Mantelrohr als dünnwandiges Stahlrohr ausgebildet ist, entweder als nahtloses Rohr oder als Blechformteil. Dadurch können die Mitnehmerelemente fertigungstechnisch besonders effizient durch radial nach außen aufgebogene Wandungsbereiche bzw. Blechabschnitte gebildet werden.

Bevorzugt kann das Mantelrohr aus Stahl oder einer Aluminiumlegierung beschaffen sein.

Eine Ausführung der Erfindung kann vorsehen, dass zumindest ein Kontaktelement von einem Schenkel quer zur Längsachse nach innen in Umfangsrichtung vorsteht. Dabei ist es möglich, dass zumindest ein Kontaktelement an einem zum Mantelrohr hin umgebogenen Endbereich zumindest eines Schenkels ausgebildet ist. Erfindungsgemäß sind die Kontaktelemente auf den einander zugewandten Innenseiten der Schenkel angebracht, die beim Verspannen der Spanneinrichtung gegeneinander bewegt werden. Dabei stehen die Kontaktelemente bevorzugt so weit nach innen vor, dass sie bereits in entspanntem Zustand der Spanneinrichtung an den Außenseiten der Mitnehmerelemente anliegen. Dies kann beispielsweise dadurch realisiert werden, dass ein Endabschnitt am freien Ende des Schenkels nach innen umgeformt wird, beispielsweise radial nach innen umgebogen wird. Der eigentliche Kontaktbereich des Kontaktelements kann dann am Rand des umgeformten Bereichs ausgebildet sein, so dass er erfindungsgemäß ein Mitnehmerelement an einer Mitnehmerfläche auf dessen Außenseite in tangentialer Richtung kontaktieren kann.

Es ist vorteilhaft, dass die Klemmschelle als Blechformteil, vorzugsweise als einstückiges integrales Bauteil ausgebildet ist. Dies ermöglicht eine rationelle Fertigung und eine flexible Formgebung. Die Schenkel können zusammen mit dem Bogenabschnitt auf einem Blechzuschnitt geformt werden. Weiterhin können die freien Endbereiche der Schenkel radial nach innen umgebogen werden, wobei an den dann zum Mantelrohr weisenden Enden weitere Umformungen erfolgen können, um das Kontaktelement auszubilden. Insbesondere kann durch weitere Umformung sichergestellt werden, dass das Kontaktelement beim Verspannen der Schenkel sicher in tangentialer Richtung gegen das jeweils korrespondierende Mitnehmerelement bewegt werden kann.

Der Klemmabschnitt ist vorzugsweise in einem Endbereich des Mantelrohrs ausgebildet. Der Schlitz kann dann als in Längsrichtung parallel zur Längsachse verlaufender Schlitz ausgebildet werden, der zu einem Ende des Mantelrohrs hin offen ist. Dieser Längsschlitz erstreckt sich folglich von einem Ende des Mantelrohrs aus und kann besonders einfach von der Stirnseite aus in Längsrichtung eingebracht, beispielsweise eingefräst werden.

Der Klemmabschnitt hat bevorzugt einen definierten Innendurchmesser, der relativ zum Außendurchmesser der Stelleinheit ein definiertes Spiel in radialer Richtung hat. Dadurch kann ein definiertes Spannverhalten beim Fixieren der Lenksäule erreicht werden. Bevorzugt wird der Innendurchmesser des Mantelrohrs im Klemmabschnitt bei der Produktion kalibriert.

Zur Anbringung der Lenksäule in einem Fahrzeug kann das Mantelrohr zwischen zwei Seitenwangen einer Trageinheit gelagert sein, die an einer Fahrzeugkarosserie anbringbar ist. Derartige Trageinheiten sind bekannt und umfassen in der Regel zwei quer zur Längsachse vorstehende Seitenwangen, die sich ebenfalls quer zur Längsachse gegenüberliegen und das Mantelrohr zwischen sich aufnehmen können. Dadurch, dass die Seitenwangen mittels einer Spanneinrichtung, üblicherweise der genannten Spanneinrichtung für die Längsverstellung, gegeneinander und damit von außen gegen das Mantelrohr verspannt werden können, kann das Mantelrohr reibschlüssig an der Trageinheit fixiert werden. Dabei ist es möglich, dass das Mantelrohr an seinem vorderen, dem Lenkrad abgewandten Endbereich um eine Schwenkachse schwenkbar gelagert ist und die Fixierung an unterschiedlichen Positionen in der Erstreckung der Seitenwangen erfolgen kann, so dass eine Höhenverstellung der Lenkradposition realisiert werden kann. Bei der erfindungsgemäßen Lenksäule können die Seitenwangen von außen an der Klemmschelle anliegen, bevorzugt im Bereich der Schenkel. Beim Fixieren mittels der Spanneinrichtung wird somit die Klemmschelle an der Trageinheit fixiert, das Mantelrohr in der beschriebenen Weise an der Klemmschelle, und die Stelleinheit in dem Mantelrohr.

Eine vorteilhafte Ausführung der Erfindung sieht vor, dass die Spanneinrichtung einen quer zur Längsachse durch die Schenkel durchgehenden Spannbolzen aufweist, der mit einem Widerlager und einem Spanngetriebe verbunden ist, wobei sich das Widerlager außen auf dem einen Schenkel und das Spanngetriebe sich außen auf dem anderen Schenkel abstützt. Das Spanngetriebe kann in an sich bekannter Weise als Hubgetriebe ausgebildet sein, welches sich von außen auf dem einen Schenkel abstützt und bei Betätigung eines Betätigungselements, in der Regel eines manuell bedienbaren Spannhebels, auf den Spannbolzen eine nach außen gerichtete Spannkraft ausübt. Dadurch zieht der Spannbolzen über das außen auf dem anderen Schenkel abgestützte Widerlager diesen anderen Schenkel gegen den einen Schenkel. Dadurch wird die Klemmschelle zwischen den Schenkeln reibschlüssig eingespannt. Derartige Spanneinrichtungen sind im Prinzip bekannt und können als Hubgetriebe beispielsweise Keil-, Nocken- oder Kippstift-Getriebe aufweisen, die eine Drehung des Spannbolzens in einen Spannhub bzw. eine Spannkraft umsetzen.

Alternativ zu einem Betätigungshebel kann die Spanneinrichtung auch durch einen motorischen Antrieb betätigt werden.

Bei der Erfindung ist der Spannbolzen vorzugsweise durch Öffnungen in den gegenüberliegenden Schenkeln hindurchgeführt, die sich in der Nähe der Endbereiche befinden.

Bevorzugt ist der Spannbolzen orthogonal zur Längsachse angeordnet und weist einen Abstand zur Längsachse auf.
Wenn das Mantelrohr in einer Trageinheit gehaltert ist, kann der Spannbolzen die Seitenwangen der Trageinheit durchsetzen. Bevorzugt weisen die Seitenwangen Langlöcher auf, durch die der Spannbolzen hindurchgeführt ist und in denen der Spannbolzen in Höhenrichtung verschiebbar ist zur Verstellung der Höhenposition.

Der Schlitz kann an zumindest einem Ende eine Aufweitung in Umfangsrichtung aufweisen. Die Aufweitung kann im Endbereich des Schlitzes innerhalb der Längserstreckung des Mantelrohrs einen in Umfangsrichtung, quer zur Längserstreckung verlaufenden Schlitzbereich umfassen, so dass der Schlitz T-förmig ausgebildet ist. Dadurch wird erreicht, dass beim Verspannen der durch den Schlitz voneinander getrennten Bereiche des Klemmabschnitts auf der Stelleinheit keine unerwünscht hohen Materialspannungen im Endbereich des Schlitzes auftreten. Weiterhin wird dadurch eine gleichmäßigere Verspannung in der Fixierstellung erreicht.

Die Erfindung betrifft weiterhin ein Verfahren zur Herstellung eines Mantelrohrs für eine Lenksäule, welches einen Klemmabschnitt mit einem Schlitz aufweist, der sich von einem Ende des Mantelrohrs aus in Richtung der Längsachse erstreckt, gekennzeichnet durch die Schritte
- Bereitstellen eines Rohrabschnitts mit einem Roh-Innendurchmesser und einem Roh-Außendurchmesser,
- Einbringen eines Schlitzes von einem Ende in axialer Richtung in den Rohrabschnitt, wobei der Schlitz quer zur Längserstreckung zwischen seinen gegenüberliegenden Randbereichen eine Roh-Schlitzbreite hat und in axialer Richtung eine Schlitzlänge hat,
- Aufbiegen der Randbereiche des Schlitzes radial nach außen zur Bildung von nach außen von dem Rohrabschnitt vorstehenden Mitnehmerelementen, wobei der Schlitz zwischen den Mitnehmerelementen eine Nenn-Schlitzbreite hat.

Der Rohrabschnitt wird als Rohling in der Länge des Mantelrohrs bereitgestellt, in den zunächst in axialer Richtung - im Folgenden gleichbedeutend als Längsrichtung bezeichnet - von einem Ende der Schlitz eingebracht wird, zum Beispiel durch Einfräsen, wobei die Breite der Einfräsung als Roh-Schlitzbreite bezeichnet wird. Der Roh-Innendurchmesser des Rohrabschnitts muss zunächst nicht genau an den Außendurchmesser der Stelleinheit angepasst sein, es kann handelsübliches Standard-Rohrmaterial mit üblichen Maßtoleranzen verwendet werden.

Anschließend werden die einander gegenüberliegenden Randbereiche entlang einer parallel zu den Rändern in Längsrichtung verlaufenden Biegekante radial nach außen aufgebogen, bevorzugt um einen Biegewinkel von 90° +/- 20°. Die axiale Länge der aufgebogenen Randbereiche ist kleiner oder gleich der Schlitzlänge.

Die aufgebogenen Randbereiche stehen von dem Außendurchmesser des Rohrabschnitts radial nach außen vor und bilden erfindungsgemäße Mitnehmerelemente. Zwischen diesen Mitnehmerelementen verläuft der Schlitz, mit anderen Worten liegen sich die Mitnehmerelemente in Umfangsrichtung gesehen mit ihren einander zugewandten Innenseiten beiderseits des Schlitzes gegenüber. Auf ihren in Umfangsrichtung voneinander abgewandten Seiten, die folglich auch dem Schlitz abgewandt sind, befinden sich die Außenseiten der Mitnehmerelemente, die wie oben erläutert im Umfangsrichtung bzw. tangential kontaktierbare Mitnehmerflächen aufweisen.

Die Ausführung des vorgenannten Verfahrens kann bevorzugt dadurch erfolgen, dass zum Aufbiegen der Randbereiche ein Umformwerkzeug umfassend einen Dorn mit einem radial abstehenden Umformkeil, dessen Breite der Nenn-Schlitzbreite (zuzüglich der elastischen Rückfederung) entspricht, in axialer Richtung von dem Ende über eine Klemmabschnittlänge in den Rohrabschnitt eingeführt wird, wobei der Umformkeil in Längsrichtung durch den Schlitz bewegt wird.

Das Umformwerkzeug wird mit dem Dorn in axialer Richtung in den offenen Rohrquerschnitt des Mantelrohrs eingeführt, und taucht in das offene Ende des Rohrabschnitts mit der gewünschten Klemmabschnittlänge ein, die kleiner oder gleich der Schlitzlänge ist. Dabei bewegt sich der Umformkeil in Längsrichtung durch den Schlitz. Dadurch dass der Umformkeil breiter ist als die Roh-Schlitzbreite, und die Randbereiche des Schlitzes nicht radial nach innen gegen den Dorn ausweichen können, werden sie radial nach außen aufgebogen zur Bildung der Mitnehmerelemente.

Ein Vorteil des erfindungsgemäßen Verfahrens ist, dass in einem einzigen Umformschritt durch eine axiale Bewegung des Umformwerkzeugs mit Dorn und Umformkeil im Klemmabschnitt des Mantelrohrs Mitnehmerelemente erzeugt werden können zur Realisierung einer erfindungsgemäßen Lenksäule.

Eine vorteilhafte Weiterbildung des erfindungsgemäßen Verfahrens umfasst das
- Zusammenpressen des Rohrabschnitts in radialer Richtung über eine Klemmabschnittlänge auf einen Nenn-Innendurchmesser, der kleiner ist als der Roh-Innendurchmesser.

Der Nenn-Innendurchmesser entspricht dem Außendurchmesser der Stelleinheit zuzüglich eines vorgegebenen Spiels. Beim Zusammenpressen wird das Mantelrohr in dem Klemmabschnitt auf das Maß der Stelleinheit kalibriert.

Alternativ kann es auch vorgesehen sein, dass der Nenn-Innendurchmesser kleiner ist als der Außendurchmesser der Stelleinheit, bevorzugt ein geringes Übermaß zueinander aufweist. Somit kann ein spielarmer bzw. spielfreier Sitz der Stelleinheit in dem Mantelrohr realisiert werden, wenn sich die Spanneinrichtung in der Freigabestellung befindet.

Dieser Verfahrensschritt kann besonders günstig dadurch realisiert werden, dass das Umformwerkzeug eine Hülse umfasst, die den Dorn koaxial umgibt, wobei der Dorn einen Dorn-Außendurchmesser hat, der dem Nenn-Innendurchmesser entspricht, und die Hülse einen Hülsen-Innendurchmesser hat, welcher dem Außendurchmesser des in der Klemmabschnittlänge auf den Nenn-Innendurchmesser zusammengepressten Rohrabschnitts entspricht.

Zur Fertigung wird das Umformwerkzeug wie beschrieben um die Klemmabschnittlänge in axialer Richtung gegen das Ende des Mantelrohr-Rohlings bewegt. Durch die Hülse wird dabei das Rohrende radial zusammengepresst, bis es mit seinem Innenumfang an dem Dorn anliegt. Damit wird der Mantelrohr-Innendurchmesser in dem Klemmabschnitt auf den Dorn-Außendurchmesser kalibriert, der dem angestrebten Nenn-Innendurchmesser des Klemmabschnitts entspricht. Beim radialen Zusammenpressen will die Mantelrohrwandung in Umfangsrichtung in die freie Schlitzbreite des Schlitzes ausweichen, dort trifft sie jedoch auf den im Schlitz entlang bewegten Umformkeil, wodurch sie radial nach außen hin aufgebogen wird.

Auf diese Weise können besonders rationell mit dem erfindungsgemäßen Axial-Umformwerkzeug in einem Fertigungsschritt das Mantelrohr in dem Klemmabschnitt kalibriert und die Mitnehmerelemente ausgebildet werden.

Anschließend kann das
- Einbringen einer Aufweitung in einen Endbereich des Schlitzes mit einer Auf-weitungs-Breite in Umfangsrichtung, die größer ist als die Roh-Schlitzbreite oder die Nenn-Schlitzbreite
erfolgen, beispielsweise durch spanende Bearbeitung wie Fräsen oder dergleichen. Dadurch erhält der Schlitz eine T-Form, durch die beim Fixieren im Endbereich des Schlitzes auftretenden Materialspannungen verringert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Ansicht,
- Figur 2: die Lenksäule gemäß Figur 1 in einer teilweise auseinander gezogenem Darstellung,
- Figur 3: eine Detailansicht der Lenksäule gemäß Figur 2,
- Figur 4: die Detailansicht gemäß Figur 3 in einer auseinander gezogenen Darstellung,
- Figur 5: eine Querschnittansicht durch die Lenksäule gemäß Figur 1,
- Figur 6: eine Querschnittansicht durch die den Klemmabschnitt der Lenksäule gemäß Figur 1,
- Figur 7a,: eine schematische Längsansicht eines Mantelrohrs in einem ersten Fertigungszustand (Mantelrohr-Rohling),
- Figur 7b: einen Querschnitt durch den das Mantelrohr gemäß Figur 7a,
- Figur 8a: eine schematische Längsansicht eines Mantelrohrs in einem zweiten Fertigungszustand,
- Figur 8b: einen Querschnitt durch das Mantelrohr gemäß Figur 8a,
- Figur 8c: einen Querschnitt durch das Umformwerkzeug gemäß Figur 8a,
- Figur 9a: eine schematische Längsansicht eines Mantelrohrs in einem dritten Fertigungszustand,
- Figur 9b: einen Querschnitt durch das Mantelrohr gemäß Figur 9a,
- Figur 10: eine weitere schematische Längsansicht eines Mantelrohrs in einem auf den Fertigungszustand gemäß Figur 9a folgenden Fertigungsschritt,
- Figur 11: eine schematische Längsansicht eines Mantelrohrs in einem vierten Fertigungszustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

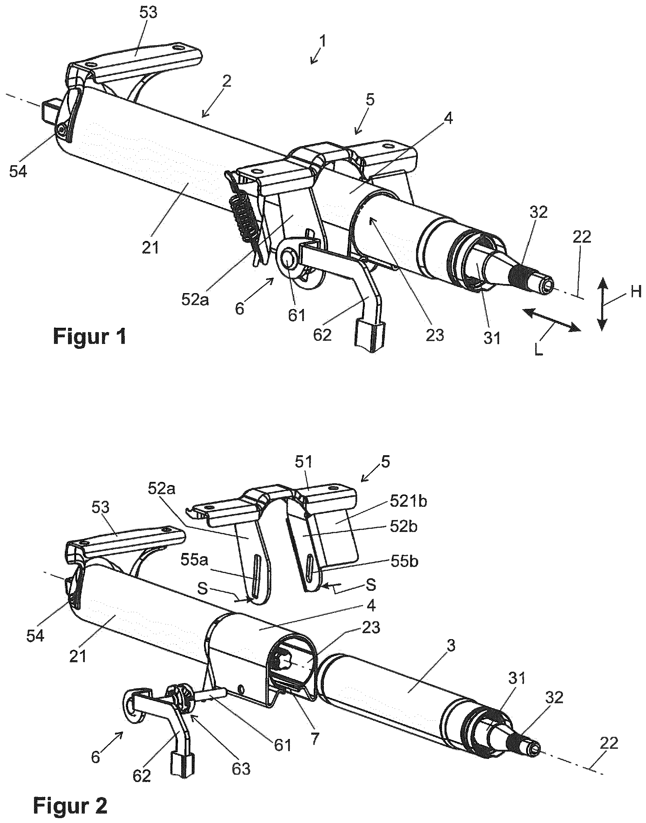

Figur 1 zeigt eine Lenksäule 1, die eine Manteleinheit 2 mit einem Mantelrohr 21 umfasst, in dem eine Stelleinheit 3 mit einer darin um die Längsachse 22 drehbar gelagerten Lenkspindel 31 aufgenommen ist. An einem bezüglich der Fahrtrichtung hinteren Befestigungsabschnitt 32 kann ein nicht dargestelltes Lenkrad befestigt werden.

Das Mantelrohr 21 weist an seinem dem Betrachter zugewandten Endbereich einen Klemmabschnitt 23 auf, auf dem eine Klemmschelle 4 angeordnet ist. In dem Klemmabschnitt 23 weist das Mantelrohr 21 einen Schlitz 7 auf, der sich in Längsrichtung parallel zur Längsachse 22 erstreckt und zum hinteren Ende des Mantelrohrs 21 - das ist in Figur 1 bis 4 das dem Betrachter zugewandte Ende - hin offen ist.

Eine Trageinheit 5 mit einem an einer nicht dargestellten Fahrzeugkarosserie anbringbaren Tragelement 51 nimmt das Mantelrohr 21 im Bereich des Klemmabschnitts 23 zwischen zwei von oben quer zur Längsachse 22 vorstehenden Seitenwangen 52a und 52b auf. Zwischen den Seitenwangen 52a und 52b befindet sich die Klemmschelle 4, die den Klemmabschnitt 23 des Mantelrohrs 21 umschließt. Die Seitenwange 52b umfasst einen Versteifungsabschnitt 521b, so dass die Seitenwange 52b biegesteifer ausgebildet ist als die Seitenwange 52a.

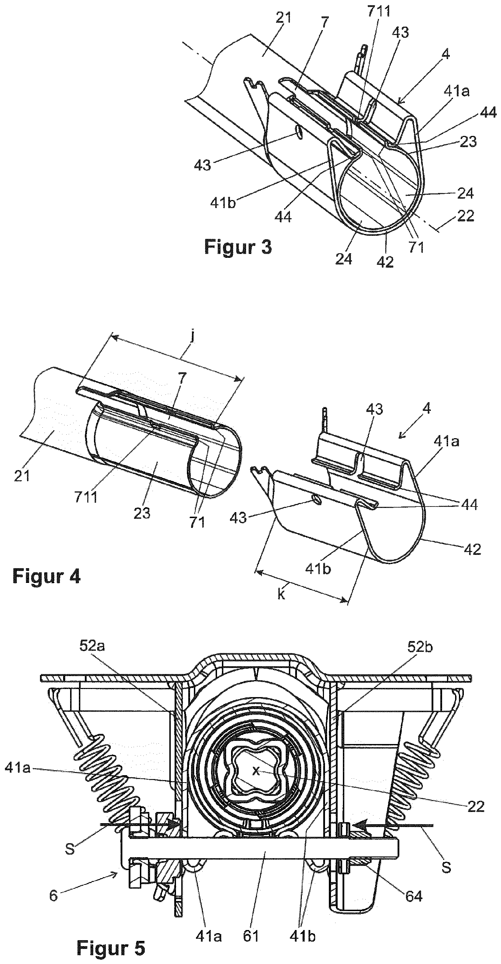

Eine Spanneinrichtung 6 umfasst einen Spannbolzen 61, der sich quer zur Längsachse 22 durch Öffnungen 55a und 55b in den Seitenwangen 52a und 52b erstreckt. An dem Spannbolzen 61 ist ein Betätigungshebel 62 angebracht, mit dem er manuell um seine Achse gedreht werden kann. Der Spannbolzen 61 ist mit einem Spanngetriebe 63 verbunden, welches als Hubgetriebe ausgebildet ist, beispielsweise als Nocken-, Keil- oder Kippstiftgetriebe, und welches sich außen auf der einen Seitenwange 52a abstützt. Über ein Widerlager 64 (siehe Figur 5) stützt sich der Spannbolzen 61 auf der dem Betrachter abgewandten Seite außen auf der anderen Seitenwange 52b ab. Wird die Spanneinrichtung 63 durch drehende Betätigung des Spannhebels 62 in Fixierstellung gebracht, wird der Spannbolzen 61 durch das Spanngetriebe 63 relativ zur Seitenwange 52a herausgehoben bzw.-gezogen und zieht dabei die andere Seitenwange 52b mit der Spannkraft S gegen die eine Seitenwange 52a heran. Dabei werden die Seitenwangen 52a und 52b derart gegeneinander mit der Spannkraft S zusammengedrückt, wie in Figur 2 und Figur 5 mit den Kraftpfeilen S angedeutet.

In Fixierstellung ist die Klemmschelle 4 und damit das Mantelrohr 21 reibschlüssig zwischen den Seitenwangen 52a und 52b eingespannt. Durch die dabei ausgeübte Spannkraft S wird auch die Stelleinheit 3 im Klemmabschnitt 23 reibschlüssig verspannt, wie weiter unten noch im Detail erläutert wird.

Wird die Spanneinrichtung 6 in Freigabe- oder Lösestellung gebracht, wird die auf die Seitenwangen 52a und 52b ausgeübte Spannkraft S gelöst, wodurch die Klemmschelle 4 entspannt wird und den Klemmabschnitt 23 freigibt, so dass der Reibschluss zwischen Mantelrohr 21 und Stelleinheit 3 gelöst wird. Dadurch ist eine Verschiebung der Stelleinheit 3 gegenüber dem Mantelrohr 21 in Längsrichtung L - parallel zur Längsachse 22 - zur Einstellung der Lenkradposition möglich.

An einem zweiten Tragelement 53, welches ebenfalls an der Fahrzeugkarosserie anbringbar ist, ist das hintere Ende des Mantelrohrs 21 um eine quer zur Längsachse 22 liegende Schwenkachse 54 schwenkbar gelagert. Um diese Schwenkachse 54 kann das Mantelrohr 21 in Freigabestellung der Spanneinrichtung 6 verschwenkt werden, wobei der Spannbolzen 61 in den schlitzförmigen Öffnungen 55a und 55b in Höhenrichtung H bewegt werden kann, um die Höhenposition des Lenkrads einzustellen. In Fixierstellung ist das Mantelrohr 21 über die Klemmschelle 4 an den Seitenwangen 52a und 52b reibschlüssig in der eingestellten Höhenposition fixiert.

Figur 3 zeigt eine Teilansicht des Mantelrohrs 21, wo die Klemmschelle 4 den Klemmabschnitt 23 umgreift, der im hinteren Endbereich des Mantelrohrs 21 ausgebildet ist. Figur 4 zeigt in derselben Perspektive die Klemmschelle 4 vom dem Klemmabschnitt 23 demontiert, wobei sie in Längsrichtung L nach hinten abgezogen dargestellt ist.

In Figur 3 und 4 ist erkennbar, wie sich der Schlitz 7 über eine Länge j in Längsrichtung L von dem offenen Ende des Mantelrohrs 21 erstreckt, d.h. zu diesem Ende hin offen ist. Im dargestellten Beispiel ist die Länge j größer als die Länge k der Klemmschelle 4, welche der Länge des Klemmabschnitts 23 entspricht. Die Klemmschelle 4 hat zwei Schenkel 41a und 41b, die einander beiderseits des Schlitzes 7 gegenüberliegen und über einen Bogenabschnitt 42 miteinander verbunden sind. Im Bereich ihrer freien Enden weisen die Schenkel 41a, 41b eine Öffnung 43 auf, durch die in zusammengebauten Zustand gemäß Figur 1 der Spannbolzen 61 quer zur Längsachse 22 hindurchgeht, wie dies der Querschnittdarstellung von Figur 5 entnehmbar ist.

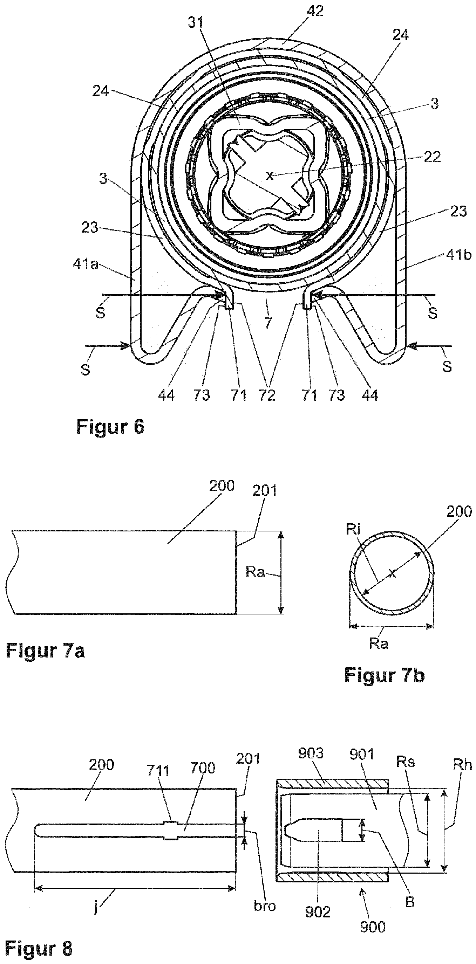

Längs des Schlitzes 7 sind entlang der in Längsrichtung verlaufenden, einander gegenüberliegenden Schlitzränder erfindungsgemäße Mitnehmerelemente 71 ausgebildet, die in dargestellten Beispiel durch radial um etwa 90° nach außen aufgebogene Wandungsbereiche des Mantelrohrs 21 gebildet werden, wie Figur 6 gezeigt. Die Mitnehmerelemente 71 haben einander in Umfangsrichtung - d.h. bezogen auf den Umfang des Klemmabschnitts 23 in tangentialer Richtung - gegenüberliegende Innenflächen 72, und in Umfangsrichtung voneinander abgewandte Außenflächen, die Kontaktflächen 73 bilden. Die Kontaktflächen 73 und die Innenflächen 72 liegen parallel zueinander und zu einer Längsebene, in der die Längsachse 22 liegt und die sich durch die Mitte des Schlitzes 7 radial nach außen erstreckt. Das Mitnehmerelement 71 weist eine Aussparung 711 auf, durch die sich der Spannbolzen 61 erstreckt. Im Fall einer unfallbedingten Kollision des Fahrzeuges bietet sich die Möglichkeit, dass sich der Spannbolzen 61 in Richtung der Längsachse 22 an dem Rand des Mitnehmerelement 71 abstützt.

Die freien Enden der Schenkel 41a und 41b sind nach innen umgebogen zur Bildung von Kontaktelementen 44, die bis zu den Randbereichen des Schlitzes 7 vorstehen. Dort treffen sie in Umfangsrichtung, d.h. in tangentialer Richtung bezüglich des Außenumfangs des Mantelrohrs 21 im Klemmbereich 23 auf die radial vorstehenden Kontaktflächen 73 der Mitnehmerelemente 71.

Wird die Spanneinrichtung 6 in Fixierstellung gebracht, wird von dem Spannbolzen 61 über die Seitenwangen 52a und 52b die Spannkraft S von außen auf die Schenkel 41a und 41b der Klemmschelle 4 aufgebracht. Dadurch, dass die Schenkel sich mit ihren Kontaktelementen 44 in Umfangsrichtung gegen die außen liegenden Kontaktflächen 73 der Mitnehmerelemente 71 abstützen, werden die Mitnehmerelemente 71 von den gegenüberliegenden Rändern des Schlitzes 7 her gegeneinander mit der Spannkraft S zusammengedrückt. Mit anderen Worten wirkt die Spannkraft S auf eine Reduzierung der Breite des Schlitzes 7 hin, wobei die Spannkraft S in den Umfang des Mantelrohrs 21 im Klemmabschnitt eingeleitet wird. Auf diese Weise erfolgt erfindungsgemäß von der Klemmschelle 7 eine über den Umfang gleichmäßige Krafteinleitung in den Klemmabschnitt 23, der entsprechend gleichmäßig auf der Stelleinheit 3 verspannt wird.

Auf der Innenseite des Klemmabschnitts 23 können radial nach innen vorstehende, sich segmentförmig über einen Teilbereich des Umfangs erstreckende, in Längsrichtung verlaufende Klemmelemente 24 angeordnet sein, die beispielsweise durch radiale Einformungen in dem Mantelrohr 21 gebildet werden und eine lokal angepasste Krafteinleitung der Spannkraft S in die Stelleinheit 3 ermöglichen.

Ein erfindungsgemäßes Verfahren zur Herstellung eines Mantelrohrs 21 wird im Folgenden anhand der in Figur 7a bis Figur 11 schematisch dargestellten Fertigungszustände erläutert.

Zunächst wird gemäß Figur 7a und 7b ein auf Maß abgelängter Rohrabschnitt 200 bereitgestellt, der ein freies Ende 201 aufweist und einen Roh-Außendurchmesser Ra und einen Roh-Innendurchmesser Ri auf.

In den Rohrabschnitt 200 wird vom freien Ende 201 ein Schlitz 700 eingebracht, beispielsweise durch Fräsen, der in Umfangsrichtung eine Roh-Schlitzbreite bro und eine Schlitzlängej in Längsrichtung hat.

Vor dem freien Ende 201 wird ein Umformwerkzeug 900 positioniert, welches einen Dorn 901 mit einem Durchmesser Rs hat, welcher dem Durchmesser der Stelleinheit 3 entspricht. Von dem Dorn 901 steht ein Umformkeil 902 radial ab, der in Umfangsrichtung gemessen ein Breite B hat. Die Breite B stimmt mit der Breite des fertigen Schlitzes 7 überein, d.h. in Figur 6 dem Abstand in Umfangsrichtung zwischen den Innenseiten 73 der Mitnehmerelemente 71.

Der Dorn 901 ist koaxial von einer Hülse 903 umgeben, die einen Innendurchmesser Rh hat.

Der Innendurchmesser Rh der Hülse 903 ist kleiner als der Roh-Außendurchmesser Ra des Rohrabschnitts: Rh < Ra

Der Roh-Innendurchmesser Ri des Rohrabschnitts 200 ist größer als der Durchmesser Rs des Dorns 901, der dem Durchmesser der Stelleinheit entspricht: Ri > Rs

Bevorzugt ist die Breite B des Umformkeils 902 größer als die Roh-Schlitzbreite bro, jeweils in Umfangsrichtung gemessen: B > bro

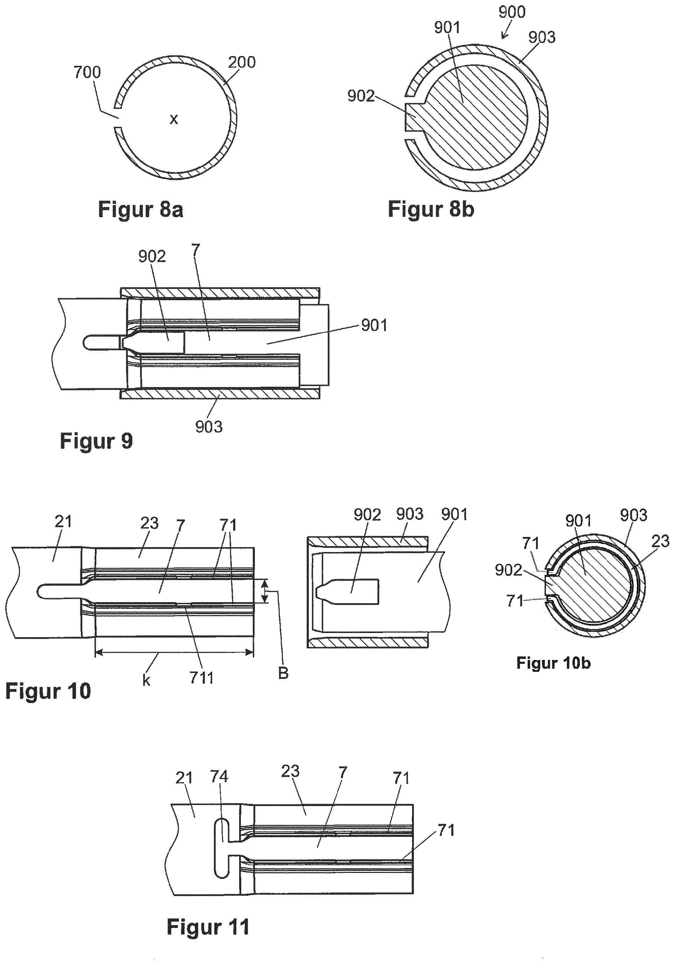

Ausgehend von der in Figur 8a dargestellten Situation wird das Umformwerkzeug 900 in axialer Richtung auf das freie Ende 201 aufgepresst, in den Figuren in Pfeilrichtung von rechts nach links, und zwar im Wesentlichen um eine Strecke k, welche der Länge der Klemmschelle 4 entspricht, und welche mit der Länge des Klemmabschnitts 23 korrespondiert. Dies ist in Figur 9a und 9b veranschaulicht.

Durch die Hülse 903 wird der Rohrabschnitt 200 auf den Hülsen-Innendurchmesser Rh radial zusammengepresst, wobei der Rohrabschnitt 200 auf den Dorn 901 aufgepresst wird und wie dieser einen Innendurchmesser Rs erhält. Dadurch wird der Klemmabschnitt 23 ausgebildet, der auf diesen Nenn-Innendurchmesser Rs kalibriert ist.

Während der vorangehend beschriebenen Durchmesser-Kalibrierung zwischen der Hülse 903 und dem Dorn 901 weicht die Wandung des Rohrabschnitts 200 in Umfangsrichtung in den Schlitz 700 aus unter Verringerung der freien Roh-Schlitzbreite bro. Dort treffen die Randbereiche des Schlitzes auf den Umformkeil 902, der sich in dem Schlitz 700 in Längsrichtung entlangbewegt. Wegen des Dorns 901, der den Durchgangsquerschnitt des zusammengepressten Rohrabschnitts 23 vollkommen ausfüllt, können die besagten Randbereiche dem Umformkeil 902 nur radial nach außen ausweichen. Dadurch werden die Ränder des Schlitzes 700 nach außen aufgebogen unter Ausbildung der erfindungsgemäß im Bereich des Klemmabschnitts 23 von dem Mantelrohr 21 radial nach außen vorstehenden Mitnehmerelemente 71. Der Schlitz 7 ist dadurch zwischen den Mitnehmerelementen 71 auf die Schlitzbreite B entsprechend der Breite B des Umformkeils kalibriert.

Anschließend wird das Umformwerkzeug 900 von dem Klemmbereich 23 des Mantelrohrs 21 abgezogen, was in den Figuren 10a und 10b dargestellt ist.

In Figur 11 ist der Schlitz 7 dadurch fertiggestellt, dass an seinem dem Rohrende 201 abgewandten Ende eine Aufweitung 74 in Form eines in Umfangsrichtung verlaufenden Schlitzabschnitts eingebracht ist, beispielsweise durch spanende Bearbeitung wie Fräsen oder dergleichen. Insgesamt erhält der Schlitz 7 dadurch seine endgültige T-Form, welche das Auftreten von unerwünschten lokalen Materialspannungen beim Fixieren der Spanneinrichtung 6 reduziert.

### Bezugszeichenliste

- 1: Lenksäule
- 2: Manteleinheit
- 21: Mantelrohr
- 22: Längsachse
- 23: Klemmabschnitt
- 24: Klemmelemente
- 3: Stelleinheit
- 31: Lenkspindel
- 32: Befestigungsabschnitt
- 4: Klemmschelle
- 41a, b: Schenkel
- 42: Bogenabschnitt
- 43: Öffnung
- 44: Kontaktelemente
- 5: Trageinheit
- 51: Tragelement
- 52a, b: Seitenwange
- 53: Tragelement
- 54: Schwenkachse
- 55a, b: Öffnungen
- 6: Spanneinrichtung
- 61: Spannbolzen
- 62: Spannhebel
- 63: Spanngetriebe
- 64: Widerlager
- 7: Schlitz
- 71: Mitnehmerelemente
- 72: Innenflächen
- 73: Kontaktflächen
- S: Spannkraft
- L: Längsrichtung
- j: Länge Schlitz
- H: Höhenrichtung
- k: Länge Klemmschelle / Klemmabschnitt

- 200: Rohrabschnitt
- 201: freies Ende
- 700: Schlitz
- 900: Umformwerkzeug
- 901: Dorn
- 902: Umformkeil
- 903: Hülse
- Ra: Roh-Außendurchmesser Rohrabschnitt
- Ri: Roh-Innendurchmesser Rohrabschnitt
- bro: Roh-Schlitzbreite
- Rs: Durchmesser Dorn / Innendurchmesser Klemmabschnitt
- B: Breite Umformkeil
- Rh: Innendurchmesser Hülse

## Patentansprüche

1. Lenksäule (1) für ein Kraftfahrzeug, umfassend
eine Manteleinheit (2) mit einem Mantelrohr (21), das zumindest einen Klemmabschnitt (23) aufweist mit einem in Richtung der Längsachse (22) verlaufenden Schlitz (7),
eine Klemmschelle (4), die mit zwei einander quer zur Längsachse (L) gegenüberliegenden, über einen Bogenabschnitt (42) miteinander verbundenen Schenkeln (41a, 41b), zwischen denen der Klemmabschnitt (23) des Mantelrohrs (21) zumindest teilweise aufgenommen ist,
eine in dem Mantelrohr (21) angeordnete Stelleinheit (3) mit einer darin um ihre Längsachse (22) drehbar gelagerten Lenkspindel (31),
eine Spanneinrichtung (6), die in einer Fixierstellung die Klemmschelle (4) auf dem Mantelrohr (21) verspannt, wobei der Klemmabschnitt (23) auf der Stelleinheit (3) verspannt wird und die Stelleinheit (3) in Richtung der Längsachse (22) relativ zum Mantelrohr (21) festlegt und in einer Freigabestellung die Klemmschelle (4) entspannt und eine Verstellung der Stelleinheit (3) relativ zum Mantelrohr (21) in Richtung der Längsachse (22) freigibt,
wobei die Spanneinrichtung (6) die Schenkel (41a, 41b) in Fixierstellung quer zur Längsachse (22) gegeneinander zusammendrückt,
**dadurch gekennzeichnet,**
**dass** in den einander gegenüberliegenden Randbereichen des Schlitzes (7) an dem Mantelrohr (21) Mitnehmerelemente (71) angeordnet sind, und die Schenkel (41a, 41b) auf ihren einander zugewandten Seiten Kontaktelemente (44) aufweisen, die in Fixierstellung quer zur Längsachse (22) gegen die einander abgewandten Außenseiten der Mitnehmerelemente (71) andrückbar sind, wobei der Schlitz (7) durch die Überführung der Spanneinrichtung ausgehend von der Freigabestellung in die Fixierstellung verschmälert wird.

2. Lenksäule nach Anspruch 1, **dadurch gekennzeichnet, dass** die Mitnehmerelemente (71) von dem Mantelrohr (21) radial nach außen vorstehen.

3. Lenksäule nach einem der vorangehenden Ansprüche, **dadurch gekennzeichnet, dass** zumindest ein Mitnehmerelement (71) als Aufbiegung des Mantelrohrs (21) in zumindest einem Teilbereich des Randbereiches des Schlitzes (7) ausgebildet ist.

4. Lenksäule nach einem der vorangehenden Ansprüche, **dadurch gekennzeichnet, dass** zumindest ein Kontaktelement (44) von einem Schenkel (41a, 41b) quer zur Längsachse (22) nach innen im Umfangsrichtung vorsteht.

5. Lenksäule nach einem der vorangehenden Ansprüche, **dadurch gekennzeichnet, dass** zumindest ein Kontaktelement (44) an einem zum Mantelrohr (21) hin umgebogenen Endbereich zumindest eines Schenkels (41a, 41b) ausgebildet ist.

6. Lenksäule nach einem der vorangehenden Ansprüche, **dadurch gekennzeichnet, dass** die Klemmschelle (4) als Blechformteilausgebildet ist.

7. Lenksäule nach einem der vorangehenden Ansprüche, **dadurch gekennzeichnet, dass** das Mantelrohr (21) zwischen zwei Seitenwangen (52a, 52b) einer Trageinheit (5) gelagert ist, die an einer Fahrzeugkarosserie anbringbar ist.

8. Lenksäule nach einem der vorangehenden Ansprüche, **dadurch gekennzeichnet, dass** die Spanneinrichtung (6) einen quer zur Längsachse (26) durch die Schenkel (41a, 41b) durchgehenden Spannbolzen (61) aufweist, der mit einem Widerlager (64) und einem Spanngetriebe (63)verbunden ist, wobei sich das Widerlager (64) außen auf dem einen Schenkel (41a) und das Spanngetriebe (63) sich außen auf dem anderen Schenkel (41b) abstützt.

9. Lenksäule nach einem der vorangehenden Ansprüche, **dadurch gekennzeichnet, dass** der Schlitz (7) an zumindest einem Ende eine Aufweitung (74) in Umfangsrichtung aufweist.

10. Verfahren zur Herstellung eines Mantelrohrs (21) für eine Lenksäule (1), welches einen Klemmabschnitt (23) mit einem Schlitz (7) aufweist, der sich von einem Ende des Mantelrohrs (21) aus in Richtung der Längsachse erstreckt, **gekennzeichnet durch** die Schritte
- Bereitstellen eines Rohrabschnitts (200) mit einem Roh-Innendurchmesser (Ri) und einem Roh-Außendurchmesser (Ra),
- Einbringen eines Schlitzes (700) von einem Ende (201) in axialer Richtung in den Rohrabschnitt (200), wobei der Schlitz (700) quer zur Längserstreckung zwischen seinen gegenüberliegenden Randbereichen eine Roh-Schlitzbreite (bro) hat und in axialer Richtung eine Schlitzlänge (I) hat,
- Aufbiegen der Randbereiche des Schlitzes (700) radial nach außen zur Bildung von nach außen von dem Rohrabschnitt (200) vorstehenden Mitnehmerelementen (71), wobei der Schlitz (7) zwischen den Mitnehmerelementen (71) eine Nenn-Schlitzbreite (B) hat.

11. Verfahren nach Anspruch 10, **gekennzeichnet durch** den Schritt
- Zusammenpressen des Rohrabschnitts (200) in radialer Richtung über eine Klemmabschnittlänge (k) auf einen Nenn-Innendurchmesser (Rs), der kleiner ist als der Roh-Innendurchmesser (Ri).

12. Verfahren nach Anspruch 10, **dadurch gekennzeichnet, dass** zum Aufbiegen der Randbereiche ein Umformwerkzeug (900) umfassend einen Dorn (901) mit einem radial abstehenden Umformkeil (902), dessen Breite (B) der Nenn-Schlitzbreite entspricht, in axialer Richtung von dem Ende (201) in den Rohrabschnitt eingeführt wird, wobei der Umformkeil (902) durch den Schlitz (700) bewegt wird.

13. Verfahren nach Anspruch 12, **dadurch gekennzeichnet, dass** das Umformwerkzeug (900) eine Hülse (903) umfasst, die den Dorn (901) koaxial umgibt, wobei der Dorn (901) einen Dorn-Außendurchmesser (Rs) hat, der dem Nenn-Innendurchmesser (Rs) im Klemmabschnitt (23) entspricht, und die Hülse (903) einen Hülsen-Innendurchmesser (Rh) hat, welcher dem Außendurchmesser des in der Klemmabschnittlänge auf den Nenn-Innendurchmesser zusammengepressten Rohrabschnitts entspricht.

14. Verfahren nach Anspruch 10, **gekennzeichnet durch** den Schritt
- Einbringen einer Aufweitung in einen Endbereich des Schlitzes mit einer Aufweitungs-Breite in Umfangsrichtung, die größer ist als die Roh-Schlitzweite oder die Nenn-Schlitzweite.

## Claims

1. Steering column (1) for a motor vehicle, comprising
a jacket unit (2) with a jacket tube (21), which comprises at least one clamping section (23) with a slot (7) which extends in the direction of the longitudinal axis (22),
a clamping collar (4), which with two legs (41a, 41b) which lie opposite each other transversely to the longitudinal axis (L) and are interconnected via an arcuate section (42), and between which the clamping section (23) of the jacket tube (21) is at least partially accommodated,
an actuating unit (3) arranged in the jacket tube (21), with a steering spindle (31) which is rotatably mounted therein around its longitudinal axis (22),
a clamping device (6), which in a fixing position clamps the clamping collar (4) on the jacket tube (21), wherein the clamping section (23) is clamped on the actuating unit (3) and fixes the actuating unit (3) in the direction of the longitudinal axis (22) relative to the jacket tube (21) and in a release position unclamps the clamping collar (4) and frees an adjustment of the actuating unit (3) relative to the jacket tube (21) in the direction of the longitudinal axis (22),
wherein the clamping device (6) presses the legs (41a, 41b) toward each other transversely to the longitudinal axis (22) in the fixing position,
**characterized in that**
driver elements (71) are arranged on the jacket tube (21) in the oppositely disposed edge regions of the slot (7), and the legs (41a, 41b), on their sides facing each other, comprise contact elements (44) which in the fixing position can be pressed against the outer sides of the driver elements (71), facing away from each other, transversely to the longitudinal axis (22), wherein the slot (7) becomes narrower as a result of the transition of the clamping device from the release position into the fixing position.

2. Steering column according to Claim 1, **characterized in that** the driver elements (71) project radially outward from the jacket tube (21).

3. Steering column according to either of the preceding claims, **characterized in that** at least one driver element (71) is designed as a bend of the jacket tube (21) in at least one section of the edge region of the slot (7).

4. Steering column according to one of the preceding claims, **characterized in that** at least one contact element (44) projects inward in the circumferential direction from a leg (41a, 41b) transversely to the longitudinal axis (22).

5. Steering column according to one of the preceding claims, **characterized in that** at least one contact element (44) is formed on an end region of at least one leg (41a, 41b) which is bent round toward the jacket tube (21).

6. Steering column according to one of the preceding claims, **characterized in that** the clamping collar (4) is designed as a sheet metal formed part.

7. Steering column according to one of the preceding claims, **characterized in that** the jacket tube (21) is supported between two side cheeks (52a, 52b) of a support unit (5) which can be attached to a vehicle body.

8. Steering column according to one of the preceding claims, **characterized in that** the clamping device (6) comprises a clamping pin (61) which passes through the legs (41a, 41b) transversely to the longitudinal axis (26) and which is connected to a counter bearing (64) and to a clamping gear (63), wherein the counter bearing (64) is supported on the outside on the one leg (41a) and the clamping gear (63) is supported on the outside on the other leg (41b) .

9. Steering column according to one of the preceding claims, **characterized in that** the slot (7) comprises a widened section (74) in the circumferential direction on at least one end.

10. Method for producing a jacket tube (21) for a steering column (1), which comprises a clamping section (23) with a slot (7) which extends from one end of the jacket tube (21) in the direction of the longitudinal axis, **characterized by** the steps
- providing a tube section (200) with a rough inside diameter (Ri) and a rough outside diameter (Ra),
- introducing a slot (700) into the tube section (200) from one end (201) in the axial direction, wherein the slot (700) has a rough slot width (bro) between its oppositely disposed edge regions transversely to the longitudinal extent and has a slot length (1) in the axial direction,
- bending up the edge regions of the slot (700) radially outward for the forming of driver elements (71) which project outward from the tube section (200), wherein the slot (7) has a nominal slot width (B) between the driver elements (71).

11. Method according to Claim 10, **characterized by** the step
- compressing the tube section (200) in the radial direction over a clamping section length (k) to a nominal inside diameter (Rs) which is smaller than the rough inside diameter (Ri).

12. Method according to Claim 10, **characterized in that** for the bending up of the edge regions a forming tool (900), comprising a mandrel (901) with a radially projecting forming wedge (902), the width (B) of which corresponds to the nominal slot width, is inserted into the tube section in the axial direction from the end (201), wherein the forming wedge (902) is moved through the slot (700).

13. Method according to Claim 12, **characterized in that** the forming tool (900) comprises a sleeve (903) which coaxially encompasses the mandrel (901), wherein the mandrel (901) has an mandrel outside diameter (Rs) which corresponds to the nominal inside diameter (Rs) in the clamping section (23), and the sleeve (903) has a sleeve inside diameter (Rh) which corresponds to the outside diameter of the tube section which within the clamping section length is compressed to the nominal inside diameter.

14. Method according to Claim 10, **characterized by** the step
- introducing a widened section into an end region of the slot with a widened section width in the circumferential direction which is larger than the rough slot width or the nominal slot width.

## Revendications

1. Colonne de direction (1) pour un véhicule automobile, comprenant :
une unité d'enveloppe (2) avec un tube d'enveloppe (21) qui présente au moins une portion de serrage (23) avec une fente (7) s'étendant dans la direction de l'axe longitudinal (22),
un collier de serrage (4) qui avec deux branches (41a, 41b) opposées l'une à l'autre transversalement à l'axe longitudinal (L), connectées l'une à l'autre par le biais d'une portion d'arc (42), entre lesquelles la portion de serrage (23) du tube d'enveloppe (21) est reçue au moins en partie,
une unité de commande (3) disposée dans le tube d'enveloppe (21) avec un arbre de direction (31) supporté à rotation dans celle-ci autour de son axe longitudinal (22),
un dispositif de serrage (6) qui, dans une position de fixation, serre le collier de serrage (4) sur le tube d'enveloppe (21), la portion de serrage (23) étant serrée sur l'unité de commande (3) et fixant l'unité de commande (3) dans la direction de l'axe longitudinal (22) par rapport au tube d'enveloppe (21) et, dans une position de libération, desserrant le collier de serrage (4) et permettant un déplacement de l'unité de commande (3) par rapport au tube d'enveloppe (21) dans la direction de l'axe longitudinal (22),
le dispositif de serrage (6) comprimant les branches (41a, 41b) l'une contre l'autre dans la position de fixation transversalement à l'axe longitudinal (22),
**caractérisée en ce que**
dans les régions de bord opposées l'une à l'autre de la fente (7) au niveau du tube d'enveloppe (21) sont disposés des éléments d'entraînement (71), et les branches (41a, 41b) présentent, sur leurs côtés tournés l'un vers l'autre, des éléments de contact (44) qui, dans la position de fixation, peuvent être pressés transversalement à l'axe longitudinal (22) contre les côtés extérieurs opposés l'un à l'autre des éléments d'entraînement (71), la fente (7) étant rétrécie par le transfert du dispositif de serrage de la position de libération à la position de fixation.

2. Colonne de direction selon la revendication 1, **caractérisée en ce que** les éléments d'entraînement (71) font saillie radialement vers l'extérieur depuis le tube d'enveloppe (21).

3. Colonne de direction selon l'une quelconque des revendications précédentes, **caractérisée en ce qu'**au moins un élément d'entraînement (71) est réalisé sous forme de partie recourbée du tube d'enveloppe (21) dans au moins une région partielle de la région de bord de la fente (7).

4. Colonne de direction selon l'une quelconque des revendications précédentes, **caractérisée en ce qu'**au moins un élément de contact (44) fait saillie depuis une branche (41a, 41b) transversalement à l'axe longitudinal (22) vers l'intérieur dans la direction périphérique.

5. Colonne de direction selon l'une quelconque des revendications précédentes, **caractérisée en ce qu'**au moins un élément de contact (44) est réalisé au niveau d'une région d'extrémité d'au moins une branche (41a, 41b) recourbée vers le tube d'enveloppe (21).

6. Colonne de direction selon l'une quelconque des revendications précédentes, **caractérisée en ce que** le collier de serrage (4) est réalisé sous forme de pièce façonnée en tôle.

7. Colonne de direction selon l'une quelconque des revendications précédentes, **caractérisée en ce que** le tube d'enveloppe (21) est supporté entre deux joues latérales (52a, 52b) d'une unité de support (5) qui peut être montée sur une carrosserie de véhicule.

8. Colonne de direction selon l'une quelconque des revendications précédentes, **caractérisée en ce que** le dispositif de serrage (6) présente un boulon de serrage (61) s'étendant transversalement à l'axe longitudinal (26) à travers les branches (41a, 41b), lequel est connecté à une butée (64) et à un mécanisme de serrage (63), la butée (64) s'appuyant à l'extérieur sur l'une des branches (41a) et le mécanisme de serrage (63) s'appuyant à l'extérieur sur l'autre branche (41b).

9. Colonne de direction selon l'une quelconque des revendications précédentes, **caractérisée en ce que** la fente (7) présente, au niveau d'au moins une extrémité, un élargissement (74) dans la direction périphérique.

10. Procédé pour fabriquer un tube d'enveloppe (21) pour une colonne de direction (1), qui présente une portion de serrage (23) avec une fente (7) qui s'étend depuis une extrémité du tube d'enveloppe (21) dans la direction de l'axe longitudinal, **caractérisé par** les étapes suivantes :
- fourniture d'une portion tubulaire (200) avec un diamètre intérieur brut (Ri) et un diamètre extérieur brut (Ra),
- introduction d'une fente (700) depuis une extrémité (201) dans la direction axiale dans la portion tubulaire (200), la fente (700) présentant, transversalement à l'étendue longitudinale entre ses régions de bord opposées, une largeur de fente brute (bro) et une longueur de fente (1) dans la direction axiale,
- flexion des régions de bord de la fente (700) radialement vers l'extérieur pour former des éléments d'entraînement (71) saillant vers l'extérieur depuis la portion tubulaire (200), la fente (7) présentant, entre les éléments d'entraînement (71), une largeur de fente nominale (B).

11. Procédé selon la revendication 10, **caractérisé par** l'étape suivante :
- compression de la portion tubulaire (200) dans la direction radiale sur une longueur de portion de serrage (k) à un diamètre intérieur nominal (Rs) qui est inférieur au diamètre intérieur brut (Ri).

12. Procédé selon la revendication 10, **caractérisé en ce que** pour la flexion des régions de bord, un outil de façonnage (900) comprenant un mandrin (901) avec une clavette de façonnage saillant radialement (902), dont la largeur (B) correspond à la largeur de fente nominale, est introduit dans la direction axiale depuis l'extrémité (201) dans la portion tubulaire, la clavette de façonnage (902) étant déplacée à travers la fente (700).

13. Procédé selon la revendication 12, **caractérisé en ce que** l'outil de façonnage (900) comprend un manchon (903) qui entoure coaxialement le mandrin (901), le mandrin (901) présentant un diamètre extérieur de mandrin (Rs) qui correspond au diamètre intérieur nominal (Rs) dans la portion de serrage (23), et le manchon (903) présente un diamètre intérieur de manchon (Rh) qui correspond au diamètre extérieur de la portion tubulaire comprimée au diamètre intérieur nominal dans la longueur de la portion de serrage.

14. Procédé selon la revendication 10, **caractérisé par** l'étape suivante :
- introduction d'un élargissement dans une région d'extrémité de la fente avec une largeur d'élargissement dans la direction périphérique qui est supérieure à la largeur de fente brute ou à la largeur de fente nominale.
